## Europäisches Patentamt
## European Patent Office
## Office européen des brevets

(19)

(11) Numéro de publication: **0 128 104**
**A1**

(12) # DEMANDE DE BREVET EUROPEEN

(21) Numéro de dépôt: **84420096.4**

(22) Date de dépôt: **30.05.84**

(51) Int. Cl.³: **F 16 H 47/04**
**B 60 K 17/14, F 03 C 1/06**

(30) Priorité: **02.06.83 FR 8309537**

(43) Date de publication de la demande:
**12.12.84 Bulletin 84/50**

(84) Etats contractants désignés:
**DE GB IT**

(71) Demandeur: **HYMETA S.A.**
**36 rue du Vercors Zône Industrielle de la Chauvetière**
**F-42100 Saint-Etienne(FR)**

(72) Inventeur: **Ponchaux, Jean-Luc**
**Les Chalayes**
**F-42660 Saint-Genest-Malifaux(FR)**

(74) Mandataire: **Dupuis, François**
**Cabinet Charras 3 Place de l'Hôtel-de-Ville**
**F-42000 St.Etienne(FR)**

(54) **Mécanisme de transmission de puissance.**

(57) Le mécanisme est remarquable en ce qu'il combine dans un corps ou carter de montage (1, 2): d'une part un organe moteur constitué principalement par un rotor ou dispositif tournant (5), et d'autre part, un organe ou dispositif de réaction (11) l'organe ou dispositif moteur tournant et l'organe ou dispositif de réaction étant liés chacun, d'une part à un dispositif propre de freinage (27;15) et, d'autre part, à un organe des composants d'un train d'engrenages planétaire (3;9), la disposition relative des organes étant telle qu' elle permet de réaliser deux rapports distincs de transmission, avec la possibilité d'engager et de changer les rapports, la transmission étant en charge, le mécanisme comportant une position neutre ou point mort et des moyens de freinage utilisables quel que soit le rapport de transmission engagé.

EP 0 128 104 A1

./...

FIG.1

Mécanisme de transmission de puissance.

Entrent dans le cadre de l'invention les machines-outils, machines, véhicules engins, appareils, équipés de ce mécanisme de transmission de puissance.

L'objet de l'invention se rattache notamment aux secteurs techniques des systèmes de transmission en général et dans les applications aux machines, machines-outils, véhicules, engins, appareils divers.

Il est d'abord rappelé qu'en mécanique, nombreuses sont les machines ayant deux modes distincts de fonctionnement, par exemple un déplacement rapide à faible charge et une vitesse lente de travail à forte charge.

C'est dans le cas de certaines machines-outils dans les mouvements de table et d'outil, des appareils de manutention du genre pont, treuil ou palan, et aussi certains types de véhicules automoteurs comme les chariots de manutention, les récolteuses agricoles, les machines de travaux publics du genre chargeuse ou pelle, etc...

Par ailleurs, sur toutes ces machines, appareils, véhicules, engins, il est utile, et souvent nécessaire, de passer en cours d'utilisation, d'un mode de fonctionnement à l'autre, et aussi de disposer d'une position neutre ou point-mort de transmission, ainsi que d'une position bloquée correspondant à un arrêt de fonctionnement de la machine. Dans ce cas, le schéma habituel en mécanique est celui qui associe, entre le système moteur et le système récepteur ou entrainé, un embrayage, une boite de vitesses à deux rapports et point mort , et un frein de transmission. L'encombrement de l'ensemble est généralement important.

Lorsque le changement de mode de fonctionnement doit s'opérer alors que la transmission est en charge, le nombre des systèmes disponibles est restreint. La boite connue sous le nom de "Powershift" avec convertisseur hydraulique de couple, est l'un de ces systèmes mais son coût est très élevé.

Enfin, s'il est en plus nécessaire de disposer d'une plage étendue de vitesse et d'une variation continue de la vitesse dans chacun des modes de fonctionnement, l'état actuel de la technique offre pour cela des solutions complexes qui ont de ce fait un coût excessif.

C'est le cas des transmission éléctromécaniques mettant en oeuvre un moteur à courant continu et un réducteur mécanique de vitesse, cela dans le domaine des faibles puissances et dans des applications apparentées aux machines outils.

C'est aussi le cas des transmission hydromécaniques avec une pompe et un moteur hydrostatiques à cylindrée variable, dont les organes de réglage sont souvent compliqués et couteux,et qu'il faut en plus associer à un mécanisme réducteur de vitesse pour situer la puissance dans le domaine utilisable par la machine, cela, bien entendu, au détriment du rendement global énergétique et du prix.

L'objet de la présente invention est un mécanisme de transmission de puissance conçu et étudié pour assurer deux rapports distincts de transmission, avec la possibilité d'engager et de changer les rapports, la transmission étant en charge, ce mécanisme comportant une position neutre ou point mort, et des moyens de freinage utilisables quel que soit le rapport de transmission engagé.

De manière plus précise, l'invention a pour objet un mécanisme de transmission de puissance caractérisé en ce qu'il combine, dans un carter de montage d'une part un organe moteur constitué principalement par un rotor ou dispositif tournant, et, d'autre part, un organe ou dispositif de réaction, l'organe ou dispositif moteur tournant et l'organe ou dispositif de réaction étant liés chacun, d'une part à un dispositif propre de freinage, et d'autre part, à un organe particulier des composants d'un train d'engrenages planétaire, la disposition relative des organes étant telle qu'elle permet de réaliser les différentes fonctions et possibilités énoncées précédemment.

Ces caractéristiques et d'autres encore, ainsi que leurs avantages ressortiront bien de la suite de la description qui suit.

Pour fixer l'objet de l'invention, sans toutefois le limiter, dans les dessins annexés :

La figure 1 est une vue générale en coupe axiale d'une forme de réalisation d'un mécanisme de transmission de puissance suivant l'invention, utilisant un élément hydrostatique à pistons axiaux et à cylindrée constante comme organe moteur.

Les figures 2 et 3 illustrent schématiquement chacun des deux modes de fonctionnement du mécanisme de la figure 1.

Les figures 4 et 5 sont des vues partielles en coupe du mécanisme, selon des variantes de réalisations des systèmes de freinage. La figure 4 illustre le freinage du bâti par un frein du type à ressort, et la figure 5 illustre le freinage de l'arbre central par un frein du type par pression de fluide.

Les figures 6 et 7 montrent, par vues purement schématiques, des variantes de réalisation du mécanisme, se rapportant à l'association ou coopération entre les éléments moteurs et les éléments du train planétaire.

La figure 8 est un abaque qui illustre, en coordonnées logarithmiques, le domaine d'utilisation du mécanisme de transmission dans deux modes de fonctionnement.

La figure 9 montre, par une vue purement schématique, une réalisation en variante selon laquelle on associe les organes moteur, le rotor et l'organe de réaction, aux éléments d'un train planétaire à satellites doubles.

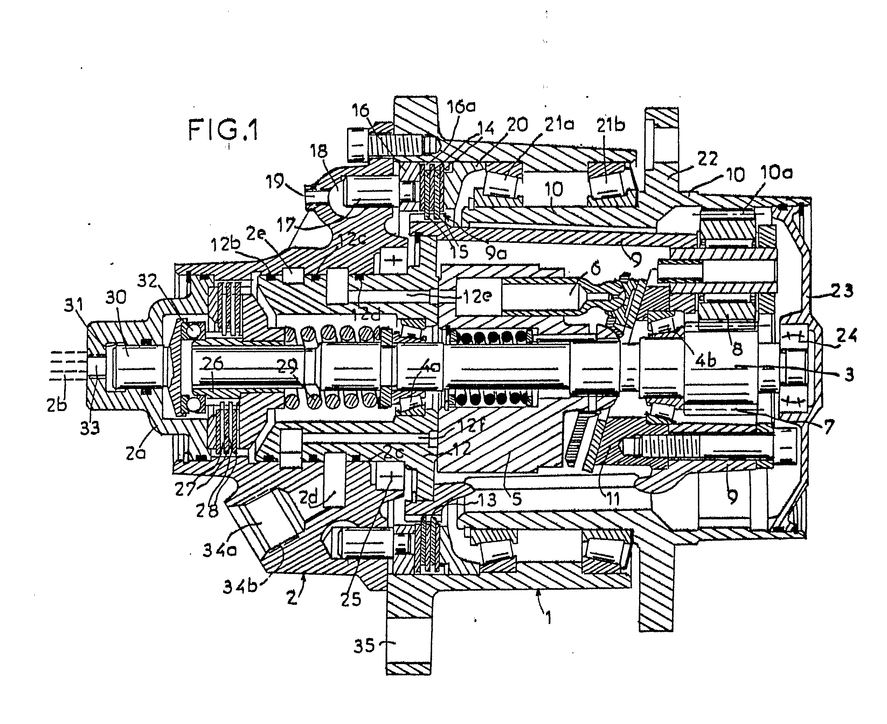

L'objet de l'invention est rendu plus concret en le décrivant non limitativement sous la forme de réalisation illustrée à la figure 1 représentant un mécanisme moto-variateur de transmission de puissance selon l'invention, à deux rapports de transmission, un point mort et un frein intégré.

Ce mécanisme comporte, dans un ensemble composé d'un carter (1) et d'un corps collecteur (2), un arbre axial (3) qui est monté tournant dans les paliers (4a et 4b). L'arbre (3) est solidaire en rotation du barillet (5) d'un ensemble moteur hydrostatique à pistons axiaux (6) dont il constitue le rotor.

L'arbre (3) est solidaire, à une extrémité, d'un pignon planétaire central (7) qui est en prise avec des pignons satellites (8) portés par un bâti (9) porte-satellites. Les satellites (8) sont en prises par ailleurs avec la denture intérieure (10a) d'une couronne (10) constituant le grand planétaire du train épicycloîdal (7,8, 10a). Sur le bâti (9) sont fixés d'une part le plateau incliné (11) sur lequel prennent appui les pistons (6) (et que l'on peut comparer à un stator de l'ensemble hydrostatique) et, d'autre part, le distributeur (12) dudit ensemble. L'ensemble : bâti (9), plateau incliné (11) et distributeur (12), est monté autour de l'arbre (3) avec la possibilité d'un déplacement relatif tournant autour dudit arbre. Le bâti (9) présente sur une portée périphérique (9a), des cannelures (13) dans lesquelles sont engagés, avec une latitude de déplacement axial, les disques (14) d'un frein à disques multiples, dont les contre-disques intercalaires (15) sont immobilisés en rotation avec une latitude de déplacement axial dans les cannelures (16a) d'une cloche (16) concentrique à l'arbre (3). La cloche (16) est immobilisée en rotation par rapport au collecteur (2) et au carter (1) par des doigts (17) qui sont engagés de façon coulissante dans des logements correspondants formés dans le collecteur (2). Ces logements débouchent dans une chambre annulaire (18) communiquant avec l'extérieur du collecteur par un orifice (19).

L'ensemble constitué par les doigts (17); la cloche (16), les contre-disques (15) et les disques (14), peut être déplacé axialement par rapport au carter (1) et au collecteur (2), dans la limite des jeux disponibles, de façon à venir en appui dans une position extrême contre la butée (20) montée dans le carter (1). Dans cette position de butée, les disques (14) et les contre-disques (15) sont pincés entre la cloche (16) et la butée (20), et le bâti (9) est maintenu immobile dans le carter (1).

La couronne (10) est montée tournante dans le carter (1) par l'intermédiaire des roulements (21a) et (21b), qui positionnent axialement la couronne (10) qui présente extérieurement une bride (22) avec des trous, ou tout autre agencement ou moyen équivalent permettant d'assembler et de fixer ladite couronne (10) avec un organe ou dispositif récepteur entraîné non représenté. L'ouverture de la couronne (10) est obturée par un chapeau (23) qui sert de support au palier à roulement (24). Ce palier (24) est associé au palier à roulement (25) monté dans le collecteur (2) de façon à assurer le centrage du bâti (9) dans le carter (1).

L'extrémité de l'arbre (3), qui est opposée à l'extrémité portant le pignon planétaire (7), est solidaire angulairement d'un manchon cannelé (26) sur lequel sont engagés les disques intercalaires (27) d'un frein à disques multiples dont les disques extérieurs (28) sont liés au collecteur (2). Ces disques ont une latitude de déplacement axial dans les cannelures et les entrainent angulairement.

Le ressort (29) (ou moyen équivalent) tend à appliquer constamment les disques intérieurs intercalaires (27) et les disques extérieurs (28) contre le fond rapporté (2a) du collecteur (2), de façon à immobiliser l'arbre (3) par rapport au carter (1).

La libération de l'arbre (3) pour le rendre tournant, est obtenue selon l'exemple de réalisation illustré, en comprimant le ressort (29) au moyen d'un piston (30) engagé coulissant dans une chambre axiale (31) du fond rapporté (2a) du collecteur (2). Le piston (30) pousse le manchon cannelé (26) par l'intermédiaire d'un roulement de butée (32).

Dans l'exemple de réalisation illustré, la compression du ressort (29) résulte de l'alimentation en fluide hydraulique amené par une canalisation (2b) jusqu'à l'orifice (33) du fond (2a), afin de mettre en pression l'intérieur de la chambre (31).

Les moyens d'amenée et de distribution du fluide hydraulique aux pistons (6) de l'ensemble hydrostatique, sont conventionnels et connus en ce qui concerne l'interface : organe distributeur (12) et barillet (5), et sont par exemple du type à glace, bien connu.

0128104

En revanche, le distributeur (12) comporte, dans la zone interne (2c) du collecteur (2), un prolongement cylindrique (12a) aménagé en joint tournant et destiné à assurer la continuité de l'écoulement du fluide hydraulique, de façon étanche, entre chacune des ouvertures d'alimentation-refoulement (34a et 34b) du collecteur (2) et l'interface barillet (5) - organe distributeur (12).

On voit à la figure 1, l'orifice (34a) qui sert à l'alimentation ou au refoulement, selon le sens d'admission, et qui communique avec la chambre annulaire (2d) du collecteur (2).

Il y a, par ailleurs, un orifice analogue (34b) correspondant à la chambre annulaire (2e), qui est semblable à l'orifice (34a) et qui n'est pas directement illustré, car il n'est pas dans le plan de la coupe de la figure 1.

Les chambres annulaires (2d) et (2e) sont rendues étanches et indépendantes l'une de l'autre, par l'emploi des joints d'étanchéité, tels que (12b), (12c), et (12d) montés sur la partie cylindrique (12a) du distributeur (12) pour venir en contact avec l'alésage interne (2c) du collecteur (2).

Les chambres annulaires (2d et 2e) ont un prolongement radial dans la partie cylindrique (12a) du distributeur (12) et, au moyen de ces prolongements, lesdites chambres communiquent chacune avec un secteur particulier de l'interface : distributeur (12) - barillet (5), cela par l'intermédiaire des conduits axiaux respectifs (12e) et (12f).

Lorsque le mécanisme est en fonctionnement, le fluide sous pression admis par l'orifice (34a) est acheminé vers les pistons (6) par la chambre (2d) et le conduit (12e), puis, après avoir perdu son énergie de pression dans la course motrice des pistons, le fluide est refoulé vers l'orifice (34b) en passant par le conduit (12f) et la chambre (2e).

Le circuit du fluide est, bien entendu, inversé si l'alimentation est faite par l'orifice (34b).

Le carter (1) présente encore périphériquement des pattes ou points d'attache tels que (35) qui sont destinés à la fixation du mécanisme sur son support.

Le fonctionnement de ce mécanisme de transmission de puissance selon l'invention est décrit comme suit :

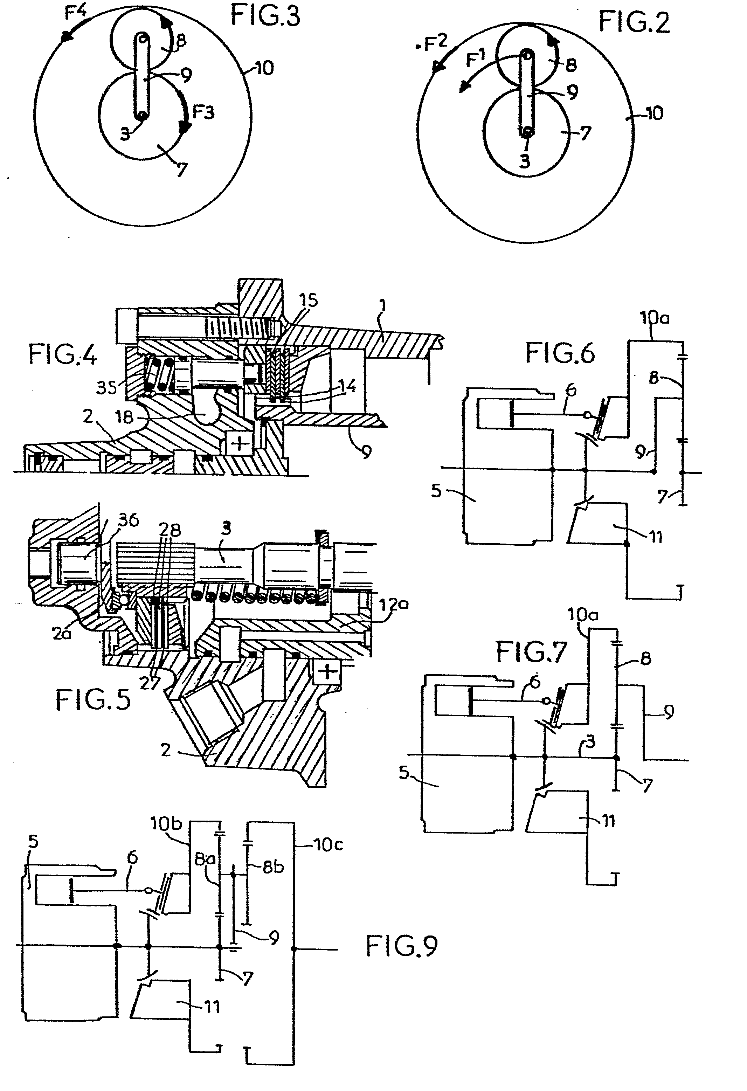

Lorsqu'un fluide hydraulique sous pression délivré par une pompe extérieure non représentée, est introduit par l'ouverture (34a), ce fluide est amené par les chambre et conduits d'alimentation jusqu'aux pistons (6) correspondants, par l'intermédiaire du distributeur (12) et de son joint tournant. Si par ailleurs, aucune pression ne s'exerce, ni sur le piston (30) (système à disques 27 - 28), ni sur les doigts (17) (système à disques (14-15), l'arbre (3) est immobilisé en rotation, par la poussée du ressort (29) qui comprime les disques intérieurs intercalaires (27) et extérieurs (28), en assurant la liaison au collecteur (2) et au carter (1), tandis que l'ensemble plateau incliné (11) et bâti (9), est entraîné en rotation par la poussée des pistons (6) qui sont en pression, les disques (14) et contre-disques (15) n'étant pas serrés contre la butée (20), et ne s'opposant donc pas à cette rotation (voir figure 2).

Le bâti (9) est ainsi entrainé en rotation autour du pignon planétaire central (7), qui est fixe, et ce mouvement est transmis à la couronne (10) par l'intermédiaire des satellites (8), ainsi qu'au moyen ou dispositif récepteur entraîné (non représenté) qui est lié à la bride (22).

Dans le cas décrit, il y a amplification de vitesse du bâti (9) à la couronne (10), donc au récepteur, et conservation du sens de rotation (voir flèches F1-F2 de la figure 2) du bâti (9) flèche F1 à la couronne (10) flèche F2.

Lorsqu'on applique une pression sur le piston (30) en admettant le fluide hydraulique dans la chambre (31), de façon à comprimer le ressort (29) et à libérer l'arbre (3) (en cessant la pression sur le sytème à diques (27 - 28), le bâti (9) étant également libéré, on obtient un point mort de transmission. En effet, en supposant que l'organe récepteur entrainé (non représenté) devienne moteur, et entraîne en rotation la couronne (10), il y a alors rotation en bloc du train planétaire sans mouvement de translation des pistons (6) dans le barillet. Le distributeur (12) et le barillet (5) sont entrainés à la même vitesse.

Lorsque, tout en maintenant la pression sur le piston (30), on admet également un fluide hydraulique qui établit une pression dans la chambre annulaire (18) et par conséquent sur les doigts (17), de façon à immobiliser le bâti (9) par serrage du système à disques (14) et contre-disques (15), l'orifice (34a) restant en communication avec la pompe, l'ensemble constitué par l'arbre (3), le barillet (5), et le pignon planétaire central (7), est mis en rotation, les pistons (6) prenant appui sur le plateau incliné (11) qui est immobile. Ce mouvement de rotation est transmis aux satellites (8), à la couronne (10) et à l'organe ou dispositif récepteur entrainé. Il se produit une réduction de vitesse de l'arbre (3) et l'organe récepteur entrainé dont le sens de rotation est toutefois conservé par rapport au cas de transmission avec amplification de vitesse (voir figure 3, en particulier les flèches F3-F4).

Lorsqu'on supprime la pression exercée sur le piston (30), tout en maintenant la pression qui résulte de l'admission du fluide hydraulique dans la chambre annulaire (18), on immobilise l'arbre (3) (par l'effet de la pression du ressort (29) qui s'exerce à nouveau), le barillet (5), le pignon planétaire central (7) et par voie de conséquence, la couronne (10) et l'organe ou dispositif récepteur entraîné, le bâti (9) étant déjà immobilisé. Cette phrase correspond à la manoeuvre de freinage, qui peut d'ailleurs être commandée, quel que soit le rapport de transmission engagé, par l'immobilisation de l'élément du train planétaire (soit le pignon planétaire central [7], soit le bâti [9])qui était en mouvement.

La commutation des alimentations par les ouvertures (34a ou 34b) (l'autre ouverture servant au refoulement), provoque une inversion du sens de rotation de l'organe ou dispositif récepteur entraîné, quel que soit le rapport alors engagé. Le mécanisme est donc totalement réversible et on peut l'associer en circuit fermé à une pompre volumétrique à cylindrée variable pous constituer une transmission hydrostatique utilisable pour l'entrainement de certains véhicules. L'ouverture en vitesse ou plage de vitesse de cette transmission, est fonction de la plage de variation de cylindrée de la pompe et de la raison du mécanisme objet de l'invention. Cette raison est, dans la présentation de la figure 1, avec un train planétaire simple, égale au rapport de réduction du train planétaire utilisé, la couronne grand planétaire (10a) étant bloquée, avec entrée de mouvement par le pignon planétaire central (7) et sortie par le bâti (9).

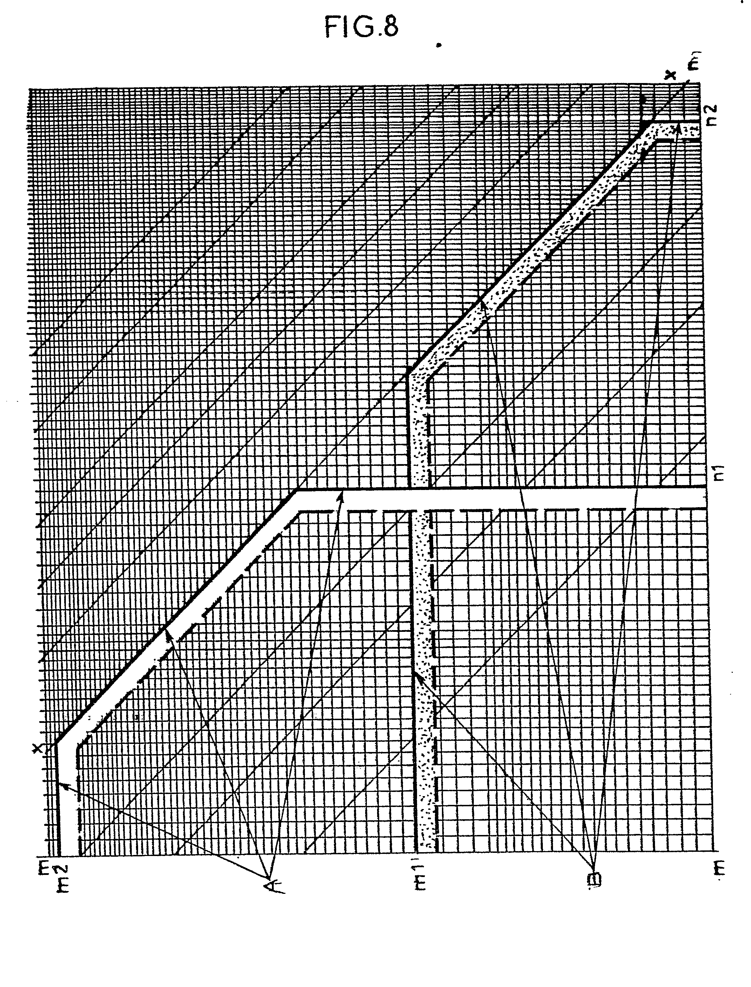

L'abaque de la figure 8 illustre en coordonnées logarithmiques qui indiquent une échelle de rapports et non des unités de mesure, en ordonnée m-m le couple du récepteur, et en abscisse mn la vitesse du récepteur), le domaine d'utilisation de ce type de transmission, dans chacun de ses modes de fonctionnement, à l'intérieur de limites, correspondant :

Pour le couple, au couple qui est obtenu à la pression maximum du circuit de fluide, donc à sa pression de tarage :

Pour la vitesse, à la vitesse qui résulte de l'admission du débit maximum de fluide délivré par la pompe ;

Pour la puissance, à la part de puissance, installée sur la machine, qui peut être transmise au mécanisme.

La zône (A) de l'abaque correspond au domaine utilisable dans le mode de démultiplication maximum (cas du pignon planétaire (7) moteur illustré à la figure 3), et la zone (B) au domaine utilisable dans le mode surmultiplié (cas du bâti (9) moteur illustré à la figure 2).

Suivant la raison du mécanisme utilisé, il y aura ou non recouvrement des zônes (A et B) sur la ligne d'iso-puissance (ligne X-X) ou est figurée la puissance maximum disponible. En ordonnée les points (m1) et (m2) correspondent à la pression maximum respectivement pour la zône (B) et la zone (A), tandis que les points (n1 et n2) correspondent à la vitesse maximum respectivement pour la zône (A) et la zône (B).

La réalisation du mécanisme de transmission selon les dispositions qui viennent d'être décrites, peut être modifiée par des dispositions en variantes, sans sortir du cadre de l'invention, en particulier en ce qui concerne les systèmes de freins :

Les systèmes de freins peuvents être tous les deux du type à freinage par ressort et arrêt de freinage par pression, le mécanisme est alors normalement freiné par l'action des ressorts, ce qui constitue une sécurité sur une machine de levage. On voit à la figure 4 un exemple de freinage par ressort (35) du bâti (9), le freinage de l'arbre par ressort s'opérant selon la figure 1.

Les systèmes de freins peuvent être tous les deux du type à freinage obtenu en exerçant une pression. En dehors des actions de pression, le mécanisme se trouve normalement en position de point mort, ce qui peut être souhaitable pour une utilisation sur un essieu d'assistance de véhicule. On voit à la figure 5 un exemple de freinage par pression en (36) s'exerçant contre les disques (27-28), le freinage du bâti (9) s'opérant par pression selon la figure 1.

Le système de frein d'arbre (3) peut être du type à freinage obtenu en exerçant une pression, tandis que le frein du bâti peut être du type à freinage par ressort. Dans ce cas, le mécanisme se trouve normalement en position de réduction de vitesse.

D'autre part, sans sortir du cadre de l'invention, on peut mettre en oeuvre d'autres liaisons des éléments de l'organe moteur avec ceux du train planétaire (7-8-10a). L'agencement représenté à la figure 1 permet de passer d'un rapport de transmission à l'autre sans changer le sens de rotation de l'organe ou dispositif récepteur entraîné, avec une réduction de vitesse dans l'un des rapports.

On peut aussi, dans le cadre de l'invention, lier l'organe ou dispositif récepteur entrainé, au pignon planétaire central (7) les organes moteurs étant liés, l'un au bâti (9) et l'autre à la couronne (10a). Dans ce cas, le sens de rotation du récepteur est encore conservé lors du changement de rapport de transmission, mais le mécanisme fonctionne en multiplicateur de vitesse (voir figure 6).

On peut également lier l'organe ou dispositif récepteur entraîné au bâti (9) et les organes moteurs liés, l'un au pignon planétaire central (7) et l'autre à la couronne (10). Le changement de rapport s'opère avec un changement de sens de rotation de l'organe ou disposition récepteur (voir figure 7).

Il est évident que les avantages du mécanisme de transmission de puissance selon l'invention, ne sont pas limités à la mise en oeuvre du type de train planétaire simple dessiné à la figure 1, pas plus d'ailleurs qu'à l'utilisation d'un organe moteur hydraulique à pistons axiaux.

Ainsi, on pourra avantageusement associer les organes moteurs, le rotor et l'organe de réaction, aux éléments d'un train planétaire à satellites doubles pour obtenir par exemple une plus grande réduction de vitesse et/ou augmenter la raison du mécanisme ou rapport entre chacun des modes de fonctionnement. cette réalisation en variante est illustrée à la figure 9. On voit les satellites doubles (8a et 8b) de type connu en soi, portés par le bâti (9), et aussi les couronnes (10b et 10c). Les organes moteurs sont alternativement le barillet (5) et le plateau (11).

On peut aussi obtenir les différents modes de fonctionnement décrit précédemment, en utilisant, en association avec un train planétaire, un moteur hydraulique ou pneumatique d'un type différent, par exemple à engrenages internes et à profils conjugués, ou à palettes, ou encore à pistons radiaux, selon le domaine des valeurs de pression dans lequel on veut faire fonctionner le mécanisme. Il suffit alors, comme dans l'exemple de réalisation représenté à la figure 1, d'associer un joint tournant au distributeur conventionnel.

On peut également utiliser un moteur électrique moyennant le même type d'adaptation qu'en matière hydraulique ou pneumatique, par adaptation du collecteur (2) aux deux modes de fonctionnement, le rotor de l'organe de réaction devenant successivement l'organe d'entraînement en rotation.

Enfin, la plupart des machines motrices mentionnées étant des machines réversibles, il est bien évidemment possible d'utiliser le mécanisme selon l'invention en pompe ou génératrice. Dans le cas représenté à la figure 1, on voit qu'il suffit d'entraîner la bride (22) en rotation pour réaliser une pompe à deux débits, chacun de ces débits correspondant à un mode de fonctionnement. Ce type de pompe peut trouver par exemple son utilité sur des machines mobiles du genre machine/agricole ou de travaux publics où elle sera entraînée directement par une prise de force normalisée à vitesse constante.

L'intérêt et les avantages du mécanisme de transmission suivant l'invention, ressortent bien de l'ensemble de la description et des dessins.

L'invention ne se limite aucunement à celui de ses modes d'application nonplus qu'à ceux des modes de réalisation de ses diverses parties ayant plus spécialement été indiquées ; elle en embrasse au contraire toutes les variantes.

0128104

Revendications

-1- Mécanisme de transmission de puissance, caractérisé en ce qu'il combine dans un corps ou carter de montage : d'une part un organe moteur constitué principalement par un rotor  ou dispositif tournant entraîné sans liaison mécanique avec la source de puissance, et d'autre part, un organe ou dispositif de réaction, l'organe ou dispositif moteur tournant et l'organe ou dispositif de réaction étant liés chacun, d'une part à un dispositif propre de freinage et, d'autre part, à un organe des composants d'un train d'engrenages planéraire, la disposition relative des organes étant telle qu'elle permet de réaliser deux rapports distincts de transmission par commutation ou inversion des fonctions de l'organe moteur et de l'organe de réaction pour passer d'un mode de fonctionnement à l'autre , avec la possibilité d'engager et de changer les rapports, la transmission étant en charge, le mécanisme comportant deux autres modes de fonctionnement dont l'un avec une position point mort et l'autre avec des moyens de freinage utilisables quel que soit le rapport de transmission engagé.

-2- Mecanisme suivant la revendication 1, caractérisé  par une réalisation comprenant  un carter (1) avec des points d'attache ou fixation, solidaire d'un collecteur (2), dans l'axe desquels est monté le dispositif rotor, avec montage tournant, par l'intermédiaire de paliers (4a-4b) d'un arbre (3) solidaire en rotation du barillet (5) d'un ensemble hydrostatique à pistons axiaux (6) articulés au plateau (11) ; l'arbre (3) étant solidaire à une extrémité d'un pignon planétaire central (7) qui est en prise avec des pignons satellites (8) portés par un bâti (9), les satellites (8) étant en prise avec la couronne grand planétaire (10a) formée à l'intérieur d'un organe (10) présentant des trous ou agencements pour lier ledit organe à un organe ou dispositif récepteur entraîné, sur le bâti (9) porte-satellites étant fixé, d'une part, le plateau (11) assimilable à un stator par rapport à l'ensemble hydrostatique à pistons (6), et, d'autre part,  un organe distributeur (12) dudit ensemble hydrostatique, ce distributeur présentant dans sa partie (12a) un agencement en joint tournant étanche, qui permet l'écoulement du fluide de pression entre des ouvertures d'alimentation-refoulement et l'interface entre l'organe-distributeur (12) et le barillet (5) : le bâti (9), le plateau-stator (11)  et le distributeur (12) pouvant avoir un déplacement relatif tournant autour de l'arbre (3) ; un dispositif à disques (14) et contre-disques (15) ou équivalent, étant monté entre d'une part le bâti (9), le plateau-stator (11) et le distributeur (12) pouvant avoir un déplacement relatif tournant autour de l'arbre (3) ; un dispositif à disques (14) et contre-disques (15) ou équivalent, étant monté entre d'une part le bâti (9) et, d'autre part, une cloche (16) solidaire du collecteur (2), afin de les solidariser ou de les libérer à l'aide de moyens agissant contre les disques par rapport à une butée (20) du carter (1) ; les organes-couronne (10) étant monté tournant dans le carter (1) ; l'extrémité de l'arbre (3) opposée à l'extrémité qui porte le planéraire central (7), étant solidaire d'un manchon cannelé (26) pour coopérer, selon la commande, par un dispositif à disques (28) et contre-disques (27), avec le collecteur (2), un ou des ressorts (29) ou autres moyens de pression appliquant les disques et contre-disques pour solidariser l'arbre (3) par rapport au collecteur (2) et au carter (1), tandis que des moyens permettent d'agir contre les disques en annulant l'effet du ressort lorsque l'arbre (3) doit être solidarisé du collecteur (2) et du carter (1).

-3- Mécanisme suivant la revendication 2, caractérisé en ce que le dispositif à disques (14) et contre-disques (15) est actionné au moyen des doigts (17) coulissant dans des logements du collecteur (2), lesdits logements débouchant dans une chambre annulaire qui communique par un orifice avec un système d'alimentation en fluide de pression.

-4- Mécanisme suivant la revendication 2, caractérisé en ce que le dispositif à disques (28) et contre-desques (27) est actionné pour annuler la pression du ou des ressorts (29), par un système de piston (30) monté coulissant dans une chambre (31) d'un fond (2a) du collecteur (2), ledit piston (30) étant soumis à l'effet de poussée d'un fluide en pression, de façon à repousser le manchon cannelé (26) portant la butée d'appui et de pression du ressort (29).

-5- Mécanisme suivant l'une quelconque des revendications 1 et 2 caractérisé en qu'en variante, les deux dispositifs de freins sont du type à freinage par ressort et à arrêt de freinage par pression.

-6- Mécanisme suivant l'une quelconque des revendicatoin 1 et 2 caractérisé en ce que, en variante, les deux dispositifs de freinage sont du type dans lequel le freinage est obtenu par pression, le mécanisme se trouvant en position point mort en dehors des pressions.

-7- Mécanisme suivant l'une quelconque des revendications 1 et 2, caractérisé en ce que, en variante, le système de frein de l'arbre (3) est du type à freinage obtenue par une pression, tandis que le frein du bâti (9) est du type à freinage par ressort.

-8- Mécanisme suivant l'une quelconque des revendications 1 et 2, caractérisé en ce que, en variante, on lie le dispositif récepteur entraîné au planétaire central (7), les organes moteurs étant alors liés l'un au bâti (9) et l'autre à la couronne (10).

-9- Mécanisme suivant l'une quelconque des revendications 1 et 2 caractérisé en ce que, en variante, on lie le dispositif récepteur, entraîné au bâti (9) et les organes moteurs l'un au planétaire central (7), et l'autre à la couronne (10).

-10- Mécanisme suivant l'une quelconque des revendications 1 et 2, caractérisé en ce que, en variante, on associe les organes moteur, le rotor et l'organe de réaction, aux éléments d'un train planétaire à satellites doubles (8a - 8b).

-11- Mécanisme suivant l'une quelconque des revendications 1 et 2, caractérisé en ce que, en variante, on utilise en association avec un train planétaire, un moteur hydraulique ou pneumatique du type à engrenages internes et à profils conjugués, ou à palettes, ou encore à pistons radiaux.

-12- Mécanisme suivant l'une quelconque des revendications 1 et 2, caractérisé en ce que, en variante, on utilise un moteur électrique avec le même type d'adaptation qu'en matière hydraulique ou pneumatique, par adaptation du collecteur (2) aux deux modes de fonctionnement, le rotor et l'organe de réaction devenant successivement l'organe d'entrainement en rotation.

-13- Mécanisme suivant l'une quelconque des revendications 1 et 2, caractérisé en ce que, en variante, on utilise ledit mécanisme en pompe ou génératrice, en entraînant la bride (22) et l'organe (10) en rotation, on réalise une pompe à deux débits, chacun des deux débits correspondant à un mode de focntionnement.

FIG.1

0128104

2/3

FIG.3

FIG.2

FIG.4

FIG.6

FIG.5

FIG.7

FIG.9

0128104

FIG.8

# RAPPORT DE RECHERCHE EUROPEENNE

EP   84 42 0096

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 405 573  (T. TAKEKAWA)  <br><br> * En entier * | 1,2,6, 10,13 | F 16 H   47/04 <br> B 60 K   17/14 <br> F 03 C    1/06 |
| A | FR-A-2 169 611  (C.A.V. LTD.)  <br><br> * Page 1, ligne 21 - page 3, ligne 12; figures 1,2 * | 1,9,10 ,12 | |
| A | FR-A-2 143 079  (LINDE AG) <br> * Page 7, ligne 28 - page 9, ligne 10; figures 1,5 * | 1,3,5 | |
| A | FR-A-2 066 195  (D.S.O. "BALKANCAR") <br> * Page 3, ligne 35 - page 4, ligne 33; figures 1-3 * | 1,12 | |
| A | FR-A-2 405 154  (ZAHNRADFABRIK FRIEDRICHSHAFEN) <br> * Page 4, ligne 28 - page 5, ligne 19; figure 3 * | 1,4 | **DOMAINES TECHNIQUES RECHERCHES (Int. Cl. ³)** <br><br> F 16 H <br> B 60 K <br> F 03 C |
| A | US-A-3 283 612  (J. DENSHAM)  <br><br> * Figures 1-6 * | 1,11, 13 | |
| A | DE-A-2 548 473  (EATON CORP.) <br><br> ---               -/- | | |

Le présent rapport de recherche a été établi pour toutes les revendications

| Lieu de la recherche | Date d'achèvement de la recherche | Examinateur |
|---|---|---|
| LA HAYE | 03-08-1984 | VOGT-SCHILB G.J.F. |

0128104

Numéro de la demande

**RAPPORT DE RECHERCHE EUROPEENNE**

Office européen
des brevets

EP  84 42 0096

| | **DOCUMENTS CONSIDERES COMME PERTINENTS** | | Page  2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | FR-A-2 149 198   (A. DESPLATS) | | |
| | ----- | | |
| | | | **DOMAINES TECHNIQUES RECHERCHES (Int. Cl. ³)** |

Le présent rapport de recherche a été établi pour toutes les revendications

| Lieu de la recherche | Date d'achèvement de la recherche | Examinateur |
|---|---|---|
| LA HAYE | 03-08-1984 | VOGT-SCHILB G.J.F. |